# EUROPEAN PATENT SPECIFICATION

(11) **EP 0 352 061 B1**
(45) Date of publication and mention of the grant of the patent: **21.09.1994**
(21) Application number: 89307252.0
(22) Date of filing: 18.07.1989
(51) Int. Cl.: C23C 8/08, C23C 8/02, F16L 58/04

(54) **Metal material with film passivated by fluorination and apparatus composed of the metal material**
Metallischer Werkstoff mit durch Fluorierung passiviertem Film und aus dem metallischen Werkstoff bestehende Anlage
Matériau métallique avec film passivé par fluoration et appareil constitué par ce matériau

(30) Priority: 20.07.1988 JP 181225/88; 09.12.1988 JP 312639/88; 13.01.1989 JP 6892/89
(43) Date of publication of application: 24.01.1990
(73) Proprietor: HASHIMOTO CHEMICAL INDUSTRIES CO., LTD., Sakai-shi Osaka (JP)
(72) Inventor: Tadahiro, Ohmi, Sendai-shi Miyagi-ken (JP); Masahiro, Miki, Abeno-ku Osaka (JP); Matagoro, Maeno, Izumi-shi Osaka (JP); Hirohisa, Kikuyama, Nara-shi Nara-ken (JP)
(74) Representative: Low, Peter John

(56) References cited:
- US-A- 3 591 426
- MATHESON GAS DATA BOOK, 4th edition 1966, pp. 237-241, Matheson Gas Co., Inc., New Jersey, US
- TRANSACTIONS OF THE METALLURGICAL SOCIETY OF AIME, vol. 242, August 1968, pp. 1635-1643, New York, US; W.A. CANNON et al.: "Passivation reactions of nickeland copper alloys with fluorine"
- Patent Abstracts of Japan, vol.8 , no.98, (C-221), [1535]; & JP-A-59 013 065

## Description

### BACKGROUND OF THE INVENTION

### 1. Field of the invention:

The present invention relates to a metal material and an apparatus composed of such metal material, and more particularly to a metal material for which the corrosion resistance is significantly improved and an apparatus employing such an improved metal material, both being very useful in the field of art using high purity gas.

### 2. Description of prior arts:

Generally, in the process of manufacturing semiconductors, specific gases of high reactivity and corrosivity such as BCl₃, SiF₄, WF₆, etc. are used, and therefore hydrolysis occurs under moist atmospheres, resulting in the generation of highly corrosive acids such as hydrogen chloride, hydrogen fluoride or the like. Accordingly, when incorporating some metal material in a storage container, pipe line, reaction chamber, etc. for the types of gaseous treatment mentioned above, there unavoidably arises a serious problem of easy corrosion.

Recently, semiconductor devices have been small-sized to improve their integration, and various researches and developments have been made so that semiconductor devices ranging from small-sized to 1µm to submicron or smaller than 0.5 µm may be put into practical use.

With the improvement of integration, it is vitally important for semiconductors to be manufactured in a process which is kept at low temperature and which has high selectivity in terms of the material of the substrate, thus a highly purified process atmosphere is essential. Even in the event of only slight corrosion of apparatus which requires such a highly purified process atmosphere, the impurities produced as a result of such corrosion may mix with wafer bringing about a deterioration in film or membrane quality and making it impossible to achieve accuracy by fine processing, which eventually results in a loss of reliability, essential for ultra-fine semiconductor devices, e.g., Ultra Large Scale Integration (ULSI). For that reason, the prevention of metal surface corrosion is absolutely important. Notwithstanding, in the prior art, counter-measures against internal part corrosion of gas supply units have been very poor, allowing secondary pollution to occur due to a strong reaction of the particular halogen gas used, thereby the desired ultra-high purification of gas has not been achived, inhibiting technological progress in the field of art.

In addition, in the field of excimer lasers, because of laser generator corrosion inhibiting long time of use, practical use thereof has been still delayed.

In the apparatus for particular halogen gas treatment, such as Reactions Ion Etching (RIE), Chemical Vapour Deposition (CVD) and/or the cylinder, pipe line, etc. to which no passivation treatment has been applied, the following reactions take place between the gas applied and moisture absorbed into the metal surface of oxide film thereof, and furthermore gaseous by-products of the reactions bring about secondary pollution:

X₂ + MO → MX₂ + ½O₂

X₂ + H₂O → 2HX + ½O₂

MXn + H₂O → MOXn ₂ + 2HX

(where: M means metal, and X means halogen)
It is known that BF₃ gas is decomposed as a result of a reaction with moisture in the following manner:

BF₃ + 3H₂O - B(OFH₂)₃

Accordingly, when filling a cylinder with BF₃ gas, filling and withdrawal of the BF₃ gas are usually repeated several times merely for the purpose of cleaning the internal part of the cylinder.

In this connection, the products by-produced as a result of the reactions mentioned above were identified by the infra-red absorption spectrum analysis of a particular halogen gas which absorbes moisture after filling a cylinder with the gas or after passing the gas through a pipe line which has absorbed moisture.

In view of the foregoing, several attempts have been heretofore proposed to apply a corrosion resistant treatment to metal surfaces, among which known studies of fluorination treatment applied to metal surfaces are:
(1) Reaction between fluorine and nickel surface as is described in ANL-5924, page 42 (1958);
(2) Reaction between fluorine and nickel surface as is described in ANL-6477, page 122 (1961);
(3) Reaction between fluorine and nickel surface as is described in J. Electrochem. Soc. Vol. 110, page 346 (1963);
(4) Method for forming a passivated film on an apparatus by fluoridation at normal temperature as is described in Matheson Gas Data Book, page 211 (1961);
(5) Study on corrosion of metal in the liquified fluorine when fluorinating a nickel alloy at normal temperature as is described in Ind. Eng. Chem, Vol. 57, page 47 (1965);
(6) Study on reaction rate between iron and fluorine as is described in J. Electrochem. Soc., Vol. 114, page 218 (1967);
(7) Reaction of passivated film between nickel or copper alloy and fluorine as is described in Trans. Met. Soc. AIME, Vol. 242, page 1635 (1968);
(8) Study on fluorination of copper and iron as is described in Oxid. Metals., Vol. 2, page 319 (1970);
(9) Reaction speed of fluorination of iron possessing an electropolished surface; and the like.

Described hereunder is the inventor's comment on the known studies mentioned above.

In the studies (1), (2) and (3), the reactivity of nickel is described, but there is no description about corrosion resistance of the films produced. In the studies (4) and (5), only fluorination at normal temperature without positive formation of film is described, and there is no detailed description about corrosion resistance. In the study (6), the reaction mechanism of iron is described. In the study (7), though corrosion resistance of the passivated film formed is described, the temperature conditions for film formation and the test on corrosion resistance are both 27°C, which is rather low, and the film formed thereby is excessively thin and not suitable for practical use. In the studies (8) and (9), though the fluorination conditions of iron and copper are described showing that corrosion resistance of iron is satisfactory at 200°C, only the critical temperature of peeling in the process of film formation is evaluated, and there is no evaluation on corrosion resistance to corrosive gas.

In effect, only reactions of fluorine are described in the studies mentioned above, and there is no study aimed at the practical formation of film passivated by fluorination. Thus, formation of film passivated by fluorination which is sufficiently corrosion-resistant under severe conditions has been increasingly demanded.

US-A-3591426 discloses a method of preventing oxidation of beryllium by heating the beryllium and then reacting it with fluorine so that the surface is coated with a beryllium fluoride film.

Patent Abstracts of Japan, vol. 8, No. 98 (C-221), (1535) and JP-A-59013065 disclose a method of forming a fluoride film of Ni or Ni-Fe by treating the surface of the thin film with a plasma having neutral radicals of fluorine.

However, neither of the above documents illustrates a method of producing a material which is capable of preventing high purity gas from lowering its purity and has sufficient corrosion resistance to a corrosive gas.

An object of the present invention is, therefore, to provide a metal material which is capable of preventing high purity gas from lowering its purity and has sufficient corrosion resistance to corrosive gas such as a particular halogen gas by forming a passivated film on the metal surface by fluorination.

Another object of the invention is to provide an apparatus composed of metal material whose surface is passivated by fluorination as mentioned above.

The foregoing objects are accomplished by forming a film passivated by fluorination, mainly composed of metal fluoride, at least partially on the surface of a metal, and by incorporating the metal with such passivated film in an apparatus at least as a part thereof.

As a result of researches and developments with respect to metal surface corrosion, the inventors have found that a film passivated by fluorination and having the desired corrosion resistance to corrosive gas can be formed by the steps of: baking at least one of such metals as stainless steel, nickel, nickel alloy, aluminium, aluminium alloy, copper, copper alloy and chromium; causing fluorine to act on the metal surface at a temperature sufficient for positive fluorination thereby forming a passivated film mainly composed of metal fluoride; and heat-treating the passivated film.

More specifically, the film passivated by fluorination is formed by the steps of: baking a metal whose surface is smoothed or polished like a mirror; heating the metal to a temperature sufficient for fluorination; causing either a simple susbtance of fluorine or fluorine diluted with such inert gases as N₂, Ar, He, etc. to act on the metal thereby forming a passivated film of not less than 0.02 um (200 Å) in thickness which is mainly composed of a metal fluoride having a desirable adherence to metal and hard to be peeled; and heat-treating the passivated film under inert gas. It is to be noted that the film formed in this manner exhibits very high corrosion reistance to a corrosive gas.

The invention essentially consists in formation of a film passivated by fluorination on the surface of at least one of such metals as stainless steel, nickel, nickel alloy, aluminiumm, aluminium alloy, copper, copper alloy and chromium, and incorporation of such metal with passivated film in components of a gas treating apparatus at least as a part thereof.

Any known metal in the form of a simple substance including stainless steel, nickel, nickel alloy, aluminium, aluminium alloy, copper, copper alloy and chromium, and any other material serving as a substrate on the surface of which a film of any of the foregoing metals is formed by plating, vacuum deposition, sputtering or any other suitable process, can be generally used as the aforesaid stainless steel, nickel, nickel alloy, aluminium, aluminium alloy, copper, copper alloy and chromium of the invention. As for the stainless steel of the invention, any known stainless steel can be also generally used. For example a stainless steel composed of 15 to 28 wt % of chromium, 3.5 to 15 wt % of nickel and remaining wt % of iron and which further contains 2 to 6 wt % of other components is preferably used in the invention. As for the nickel alloy, aluminium alloy and copper alloy of the invention, any conventional ones can be widely used on condition that not less than 50 wt % of nickel, aluminium or copper is contained therein.

As described above, in the invention, any of the said metals are baked under the inert gas, then fluorinated to form a passivated film composed of metal fluoride on every surface or at least on a part of the surface of the metal, and the metal with passivated film is further heat-treated under the atmosphere of inert gas.

The baking temperature for nickel, nickel alloy, copper, copper alloy and chromium is in the range of 350 to 600°C, preferably in the range of 400 to 500°C. The baking time is in the range of 1 to 5 hours. If the baking temperature is lower than 350°C, moisture absorbed on the nickel surface is not completely removed. When carrying out fluorination under such a moisture condition, composition of the formed film passivated by fluorination is NiF₂ 4H₂O, and any passivated film completely satisfying stoichiometric ratio is not obtained. The baking temperature for aluminium and aluminium alloy is in the range of 150 to 400°C, preferably in the range of 200 to 300°C. The baking time is in the range of 1 to 5 hours. For baking the stainless steel, the baking temperature is in the range of 200 to 500°C, preferably in the range of 250 to 450°C, and the baking time is in the range of 1 to 5 hours.

The fluorinating temperature for stainless steel is in the range of 100 to 300°C, but preferably in the range of 150 to 265°C. The fluorinating time is in the range of 1 to 5 hours. If the fluorinating temperature is lower than 265°C, FeF₂ is produced. On the other hand, if the fluorinating temperature is higher than 265°C, FeF₃ is produced. If a large amount of FeF₃ is produced, the film formed is cubically expanded because the bulk density of FeF₂ is 1.16 times as much as FeF₃, which eventually results in cracking and peeling of the film. If the fluorinating temperature is less than 100°C, a film of sufficient thickness cannot be obtained.

The fluorinating temperature for nickel, monel (nickel-copper alloys; trademark of International Nickel Company Inc.), copper, copper alloy and chromium is in the range of 200 to 500°C, but preferably in the range of 250 to 450°C. The fluorinating time is in the range of 1 to 5 hours. If the fluorinating temperature is lower than 200°C, a film passivated by fluorination having the sufficient thickness and excellent corrosion resistance required cannot be obtained. If carrying out the fluorination at a temperature higher than 450°C, grain boundary of nickel fluoride is generated in the passivated film, which results in cracking and peeling.

The fluorinating temperature for hastelloy C (nickel-copper alloys; trademark of International Nickel Company Inc.) is in the range of 150 to 300°C, but preferably in the range of 150 to 250°C. If the fluorinating temperature is higher than 300°C, peeling will occur and a film passivated by fluorination and having the excellent corrosion resistance required cannot be obtained.

The fluorinating temperature for aluminium and aluminium alloy is in the range of 200 to 400°C, but preferably in the range of 250 to 350°C. If the fluorinating temperature is higher than 350°C, grain boundary of aluminium fluoride is generated in the passivated film, which also results in cracking and peeling.

Fluorination should be generally carried out at normal temperature, and it may be also carried out under pressure, when required. The pressure to be applied is not more than 2 x 10⁵ Pa (2 atm) in gauge pressure.

It is preferable that fluorine is used either alone in the form of a simple substance or after being diluted with such inert gases as N₂, Ar, He or the like. When analyzing a passivated film of nickel, formed at a temperature not higher than 450°C, by X-ray diffraction, with SSX-100 type Electron Spectroscopy for Chemical Analysis (ESCA), (manufactured by Surface Science Instruments' Products), it is found that the ratio of F to Ni is about 1.1 times as much as the stoichiometric ratio of F to Ni in NiF₂, despite the fact that the composition of the formed passivated film is NiF₂. This means that the amount of fluorine is in excess by 10% with respect to nickel. This excessive fluorine is not combined with nickel but exists freely in the passivated film. The excess fluorine existing freely is an obstacle to corrosion resistance, and corrosion resistant material is thus not obtained. Every passivated film disclosed heretofore contains such excess fluorine and exhibits no corrosion resistance at all.

The heat-treating temperature for the stainless steel of the invention is in the range of 200 to 600°C, but preferably in the range of 300 to 500°C. The heat-treating temperature for the nickel, nickel alloy, copper, copper alloy and chromium of the invention is in the range of 300 to 600°C, but preferably in the range of 400 to 500°C, and that for aluminium and aluminium alloy of the invention is in the range of 200 to 400°C, but preferably in the range of 250 to 400°C. A film passivated by fluorination which is satisfactorily solid, fine, adhesive to metal and corrosion-resistant can be formed by the application of heat treatment to the passivated film for 1 to 5 hours under inert gas such as N₂, Ar, He. It is to be noted that the characteristics of a passivated film are significantly changed as mentioned above by heat-treatment thereof, which has never been acknowledged up to today. When analyzing this favourable change in film characteristic with ESCA, it was found that, after heat treatment, the ratio of metal element to fluorine in the passivated film substantially satisfied the stoichiometric ratio. In addition, measurement of the thickness of passivated film was performed using AEP-100 type elipsometer (manufactured by Shimadzu Corporation).

When carrying out the fluorination mentioned above, it is recommended to smooth the metal surface to be fluorinated, beforehand. Smoothness is to be achieved by smoothing or polishing the metal surface like a mirror, i.e., to the level of Rmax = 0.03 - 1.0 µm (maximum value of the difference between irregularities on the surface). As a result of a series of studies, the inventors found that the corrosion resistance of a film passivated by fluorination, which was formed on a metal surface smoothed to the extent of Rmax = 0.03 - 1.0 µm prior to the passivation process, was greatly improved as compared with a film passivated by fluorination which was formed on a metal surface not smoothed. In this respect, there is no restriction on the means for smoothing metal surface at all, and a variety of means can be freely selected including for example complex electropolishing means.

The film passivated by fluorination formed in this manner is generally not less than 0.02 µm (200 Å) in thickness, preferably not less than 0.03 µm (300 Å), and since the passivated film is formed on a metal used as a base material of sufficient strength, the film is hardly peeled and cracked.

Described hereunder is an apparatus for treating gas (hereinafter referred to as "gas treating apparatus") in which a metal material with the film passivated by fluorination as mentioned above is incorporated at least in the part to be in contact with corrosive gas. The metal material can be also used at parts not in contact with corrosive gas as a matter of course.

As a result of researches and developments concerning the corrosion resistance of the apparatus to particular halogen gases and pollution of high purity gases, the inventors have found that the apparatus exhibits satisfactory corrosion resistance to particular halogen gases and does not pollute particular high purity halogen gases by forming a film passivated by metallic fluorination with fluorine gas on the internal metal surface of the apparatus.

In this connection, the gas treating apparatus of the invention means all types of equipment and instrument for treating gas to be used in storage, distribution, reaction or generation of gas. More specifically, the gas treating apparatus of the invention includes gas cylinder, gas holder, pipe line, valve, RIE reactor, CVD reactor, excimer laser generator and the like.

The film passivated by fluorination in accordance with the invention exhibits an excellent corrosion resistance to halogen gas of strong corrosivity. The metal material with the film passivated by fluorination was very effective in manufacturing devices such as for instance, ULSI which needs fine processing. In other words, insert gases such as F₂ and HF which have never been utilized in the prior art are now possible. Accordingly, native oxide film of Si wafer, which hitherto has been removed only by a wet process using liquid, can be now removed by HF gas. It may be said that the invention contributes significantly to a lowering of process temperatures and the improvement of selectivity in material of substrate. Furthermore, the invention is most preferably applied to the Excimer laser, for which an improvement in reliability and durability has been an aim for many years. When used as an excitation light source in excitation of various photochemical reactions or as a light source for an excimer laser stepper which latter may be used as an exposure meter for ULSI whose pattern size is not larger than 0.5 micron. Wave lengths of KrF excimer laser ArF excimer laser are respectively 248 nm and 193 nm respectively. These wave lengths are optimum for both the excitation of a photochemical reaction and the exposure of submicron ULSI, though they have never been put into practical use in the conventional excimer lasers because fluctuations of output for each pulse exceeds 10 % and life span thereof is one million pulses at the most.

In this respect, since the internal surface of the gas supply system is coated with a film passivated by fluorination, in accordance with the invention, and surfaces of electrodes of the excimer laser (ArF, KrF) are also coated with the passivated film, fluctuation for each pulse of the laser is improved to less than 1 %, and the life span thereof is prolonged up to tens of millions of pulses, which means that life of the excimer laser is prolonged up to one year on condition that the excimer laser is used as a stepper at the rate of 1 shot/min. Thus, the excimer laser will surely be put into practical use in the very near future.

In addition, high purity hydrogen fluoride gas can be successfully supplied by using the "dry etching apparatus" and "diluted anhydrous hydrogen fluoride gas generator" both developed and filed under separate applications by the same inventors as the present invention, and in combination with the use of these apparatuses, corrosion resistance of the apparatus of the invention is greatly improved.

### BRIEF DESCRIPTION OF THE DRAWINGS

In the accompanying drawings forming a part of the present application,
Figure 1 is a schematic block diagram showing an example of the gas treating apparatus according to the present invention;
Figure 2 is a schematic block diagram of an example of a method for fluorinating the reaction chamber;
Figure 3 is an ESCA chart of a nickel surface which was baked under high purity N₂ gas at 500°C for 1 hour and fluorinated under 100% F₂ gas at 350°C for 1 to 5 hours;
Figure 4 is an ESCA chart of a nickel surface which was baked under high purity N₂ gas at 500°C for 1 hour, then fluorinated under 100% F₂ gas at 350°C for 1 to 5 hours, and further heat-treated under high purity N₂ gas at 400°C for 2 hours;
Figure 5 is an ESCA chart of the monel surface which was baked under high purity N₂ gas at 500°C for 1 hour, then fluorinated under 100% F₂ gas at 400°C for 1 to 5 hours, and further heat-treated under high purity N₂ gas at 500°C for 2 hours;
Figure 6 is an ESCA chart of the aluminium surface which was baked under high purity N₂ gas at 300°C for 1 hour, then fluorinated under 100% F₂ gas at 250°C for 1 to 5 hours, and further heat-treated under high purity N₂ gas at 350°C for 2 hours;
Figure 7 is an X-ray diffraction chart of a film passivated by fluorination formed on a polished nickel plate which was baked under high purity N₂ gas at 350°C for 1 hour, then fluorinated under 100% F₂ gas at 350°C for 1 to 5 hours, and further heat-treated under high purity N₂ gas at 400°C for 2 hours;
Figure 8 is an X-ray diffraction chart of a film passivated by fluorination formed on a polished nickel plate which was baked under high purity N₂ gas at 400°C for 1 hour, then fluorinated under 100% F₂ gas at 350°C for 1 to 5 hours, and further heat-treated under high purity N₂ gas at 400°C for 2 hours;
Figure 9 is a X-ray diffraction chart of a film passivated by fluorination formed on a hastelloy C surface which was baked under high purity N₂ gas at 400°C for 1 hour, then fluorinated under 100% F₂ gas at 250°C for 1 to 5 hours, and further heat-treated under high purity N₂ gas at 400°C for 2 hours;
Figure 10 is a X-ray diffraction chart of a film passivated by fluorination formed on a polished copper plate disk which was baked under high purity N₂ gas at 500°C for 1 hour, then fluorinated under 100% F₂ gas at 400°C for 1 to 5 hours, and further heat-treated under high purity N₂ gas at 500°C for 2 hours;
Figure 11 is a X-ray diffraction chart of a film passivated by fluorination formed on a sputtered chromium which was baked under high purity N₂ gas at 500°C for 1 hour, then fluorinated under 100% F₂ gas at 400°C for 1 to 5 hours, and further heat-treated under high purity N₂ gas at 500°C for 2 hours;
Figure 12 is an explanatory view of a device used for evaluation of the passivated film shown in Example 14;
Figure 13 is an ESCA chart showing distribution of elements in a passivated film which was fluorinated under 100% F₂ gas at 200°C for 2 hours;
Figure 14 is an ESCA chart showing distribution of elements in a passivated film which was fluorinated under 100% F₂ gas at 200°C for 2 hours, and heat-treated under inert gas at 300°C for 2 hours;
Figure 15 is an ESCA chart showing distribution of elements in the vicinity of the surface of a passivated film which was fluorinated under 100% F₂ gas at 200°C for 2 hours, and heat-treated under inert gas at 300°C for 2 hours;
Figure 16 is an ESCA chart showing elemental distribution up to the boundary of a stainless steel surface of a passivated film which was fluorinated under 100% F₂ gas at 200°C for 2 hours, and heat-treated under inert gas at 300°C for 2 hours;
Figure 17 is a chart of strength evaluated by X-ray diffraction of a passivated film which was fluorinated under 100% F₂ gas at 200°C for 2 hours;
Figure 18 is a chart of strength evaluated by X-ray diffraction of a passivated film which was fluorinated under 100% F₂ gas at 200°C for 2 hours, and heat-treated under inert gas at 300°C for 2 hours;
Figure 19 is a chart of strength evaluated by X-ray diffraction of a passivated film which was fluorinated under 100% F₂ gas at 275°C for 2 hours.
Figure 20 is an explanatory view of a device used for evaluation of the dehydration characteristics of the passivated film shown in Example 14;
Figure 21 is a diagram showing comparison of evaluation results of dehydration characteristics of the passivated films; and
Figure 22 is a diagram showing barrier effect of the films passivated by fluorination against fluorine gas. As is shown, in the passivated films which were heat-treated, there is no consumption of fluorine at all with respect to fluorine gas of the same temperature as fluorination.

### DESCRIPTION OF THE PREFERRED EMBODIMENTS

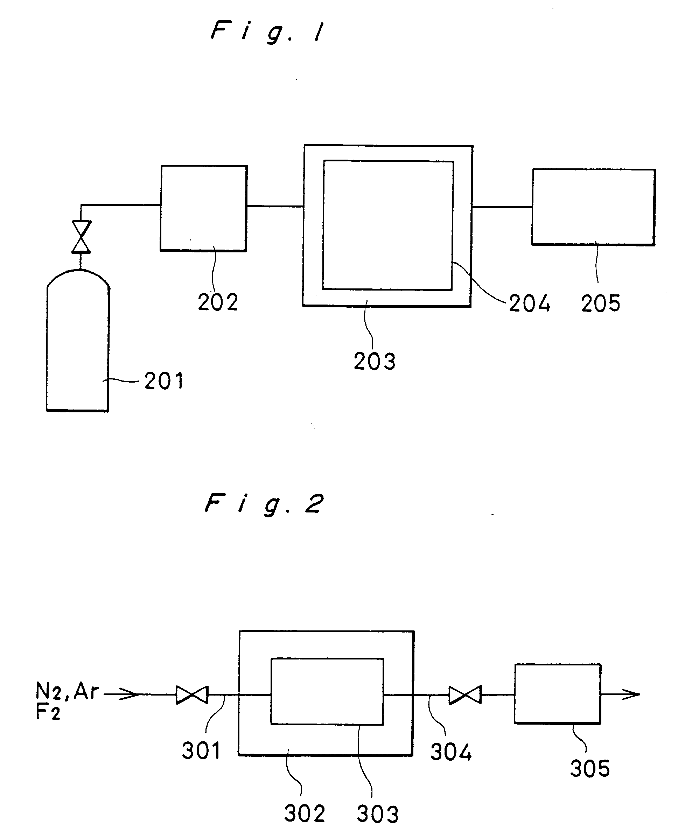

Referring now to Figure 1 showing a schematic view of the gas treating device of the invention, the gas treating device comprises a gas storage cylinder 201; a gas supply system 202 in which valves, a mass flow controller, etc. are incorporated; a reactor 203 in which RIE device, CVD device, etc. are incorporated; and a vacuum exhauster 205. A film 204 passivated by fluorination is formed on the inner wall of the chamber of the reactor 203.

Referring to Figure 2 showing an example of the passivation of the inner wall of the reaction chamber, first, dewatering (dehydration) of the reaction chamber is carried out by introducing high purity N₂ or Ar to the reaction chamber 303 through the gas introduction line 301 at the rate of 10 l/min. or so, then applying purge to the internal part of the reaction chamber. Whether or not the dewatering is sufficiently carried out can be acknowledged by monitoring dew point of the purge gas with a dew-point meter 305 disposed on the purge line 304. Thereafter, the chamber 303 is entirely heated to 400 to 500°C or so with an electric furnace 302 so that H₂O molecules absorbed on the internal surface of the chamber may be substantially dehydrated.

Then, high purity F₂ is introduced into the chamber to carry out fluorination of the internal surface of the chamber. After the fluorination for a predetermined time, an ultra-high purity N₂ or Ar is introduced into the chamber to purge the high purity F₂ residual in the chamber. Leaving the ultra-high purity N₂ or Ar to flow freely after the purging, the passivated film formed on the inner wall of the chamber is heat-treated. The obtained film passivated by such treatment is very stable with respect to corrosive gas.

Gases useful for this gas treatment apparatus are inert gases such as nitrogen, argon or helium, and halogen gases such as F₂, Cl₂, NF₃, CF₄, SF₄, SF₆, SiF₄, BF₃, HF, WF₆, MoF₆, PF₃, PF₅, AsF₃, AsF, BCl₃, etc. For constructing the apparatus using any of the passivated metals mentioned above, it is envisaged that the apparatus is arranged using the metal on which passivated film is preliminarily prepared by fluorination. It is also envisaged that the passivated film is prepared by fluorination on the required parts of the apparatus after arranging the apparatus. The fluorination can be carried out on the conditions described above.

### EXAMPLES

For the purpose of disclosing the technological features of the invention more specifically, described hereinafter are representative examples:

### Example 1:

Polished nickel plates (surface flatness Rmax = 0.03 to 1.0 um) and surfaces of nickel films of 0.4 um (4000Å) each formed by sputtering on a SUS-316L substrate were respectively baked under high purity N₂ gas at 500°C for 1 hour, then fluorinated with 100% F₂ gas for 1 to 5 hours, and further heat-treated under inert gas at 500°C for 2 hours. Table 1 shows film thicknesses for each sample according to the fluorinating temperatue thereof. It was found that there was no grain boundary, crack or peeling in the films formed by fluorination at the respective temperatures in both polished nickel plate and nickel film formed by sputtering.

**Table 1**

| Temperature of formation of films passivated by fluorination and film thickness | | | |
|---|---|---|---|
| Film formation temp. (°C) | 200 | 300 | 400 |
| Film thickness (µm) (polished nickel plate) | 0.005 | 0.03 | 0.18 |
| Film thickness (µm) (nickel film by sputtering) | 0.008 | 0.035 | 0.19 |

### Example 2:

Polished hastelloy C (trademark) (Ni51, Mo19, Cr17, FE6W5) plates (surface flatness Rmax = 0.03 to 1.0 µm) were baked under high purity N₂ gas at 500°C for 1 hour, then fluorinated with 100% F₂ gas for 1 to 5 hours, and further heat-treated under inert gas at 400°C for 2 hours. Table 2 shows film thicknesses for each sample according to the fluorination temperature thereof. It was found that there was no crack or peeling in the films formed by fluorination at temperatures of 200 and 250°C.

**Table 2**

| Temperature of formation of films passivated by fluorination and film thickness | | |
|---|---|---|
| Film formation temp. (°C) | 200 | 250 |
| Film thickness (µm) | 0.12 | 0.21 |

### Example 3:

Polished monel (trademark) (Ni66, Cu29, Al3) plates (surface flatness Rmax = 0.03 to 1.0 µm) were baked under high purity N₂ gas at 500°C for 1 hour, then fluorinated with 100% F₂ gas for 1 to 5 hours. Table 3 shows film thicknesses of each sample according to the fluorinating temperature thereof. It was found that there was no crack or peeling in the films, though there was some unevenness of color on the surface of the passivated film formed at fluorinating temperature of 500°C.

**Table 3**

| Temperature of formation of films passivated by fluorination and film thickness | | | |
|---|---|---|---|
| Film formation temp. (°C) | 300 | 400 | 500 |
| Film thickness (µm) | 0.13 | 0.21 | 0.34 |

### Example 4:

Polished copper plates (surface flatness Rmax = 0.03 to 1.0 µm) and surfaces of copper films of 0.4 um (4000 A) each formed by sputtering on a SUS-316L substrate were respectively baked under high purity N₂ gas at 500°C for 1 hour, then fluorinated with 100% F₂ gas for 1 to 5 hours, and further heat-treated under inert gas at 500°C for 2 hours. Table 4 shows film thicknesses of each sample according to the fluorinating temperature thereof. It was found that there was no crack or peeling in the passivated films in both polished copper plate and copper film formed by sputtering.

**Table 4**

| Temperature of formation of films passivated by fluorination and film thickness | | | |
|---|---|---|---|
| Film formation temp. (°C) | 300 | 400 | 500 |
| Film thickness (µm) (polished copper plate) | 0.15 | 0.22 | 0.35 |
| Film thickness (µm) (copper film by sputtering) | 0.16 | 0.22 | 0.36 |

### Example 5:

Surfaces of chromium films of 0.4 µm (4000A) each formed by sputtering on a SUS-316L substrate were respectively baked under high purity N₂ gas at 500°C for 1 hour, then fluorinated with 100% F₂ gas for 1 to 5 hours, and further heat-treated under inert gas at 500°C for 2 hours. Table 5 shows film thicknesses of each sample according to the fluorinating temperature thereof. It was found that there was no crack or peeling in the passivated films fluorinated at the respective temperatures.

**Table 5**

| Temperature of formation of passivated films by fluorination and film thickness | | | |
|---|---|---|---|
| Film formation temp. (°C) | 300 | 400 | 500 |
| Film thickness (µm) | 0.15 | 0.22 | 0.35 |

### Example 6:

Polished aluminium plates, polished aluminium alloy plates (surface flatness Rmax = 0.03 to 1.0 µm) and surfaces of aluminium films of 0.2 µm (2000A) each formed by sputtering on a SUS-316L substrate were respectively baked under high purity N₂ gas at 300°C for 1 hour, then fluorinated with 100% F₂ gas for 1 to 5 hours, and further heat-treated under inert gas at 350°C for 2 hours. Table 6 shows film thicknesses of each sample according to the fluorinating temperature thereof. It was found that there was no grain boundary, crack or peeling of the aluminium fluoride in any of the polished aluminium plates, polished aluminium alloy plates or aluminium films, formed by the sputtering mentioned above, fluorinated at temperatures of 250 and 350°C.

**Table 6**

| Temperature of formation of films passivated by fluorination and film thickness | | |
|---|---|---|
| Film formation temp. (°C) | 200 | 300 |
| Film thickness ( µm) (polished aluminum plate #1050) | 0.045 | 0.06 |
| Film thickness ( µm) (polished aluminum plate #3003) | 0.05 | 0.075 |
| Film thickness ( µm) (polished aluminum plate #5052) | 0.055 | 0.08 |
| Film thickness ( µm) (aluminum film by sputtering) | 0.07 | 0.11 |

### Example 7:

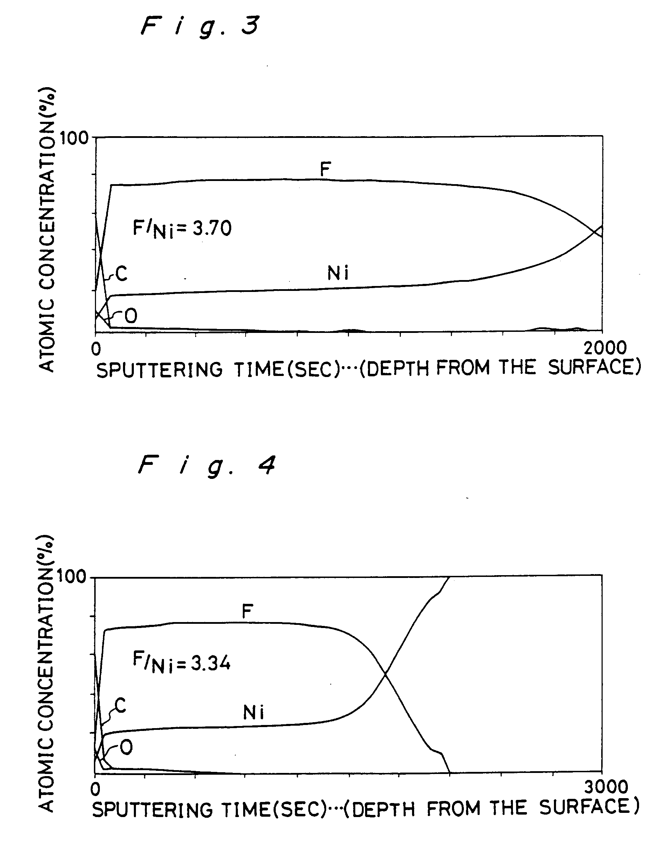

A polished nickel plate (surface flatness Rmax = 0.03 to 1.0 µm) was baked under high purity N₂ gas at 500°C for 1 hour, then fluorinated with 100% F₂ gas at 350°C for 1 to 5 hours. Figure 3 shows an ESCA chart of the surface of the fluorinated nickel plate. The fluorinated nickel plate was further heat-treated under high purity N₂ gas at 400°C for 2 hours. Figure 4 shows an ESCA chart of the surface of the heat-treated nickel. Average atomic ratio of F to Ni in Figure 3 is 3.7, and that shown in Figure 4 is 3.34. This means that fluorine existing in the fluorinated film before the heat treatment was 1.1. times as much as that existing in the fluorinated film after the heat treatment. The atomic ratio of 3.34 after the heat treatment is not coincident with the chemical structure, NiF₂, of the passivated film obtained by X-ray diffraction. This is because no calibration was applied to the ESCA. It is obvious that the improvement in composition ratio shown in Figures 3 and 4 was achieved as a result of the heat treatment.

### Example 8:

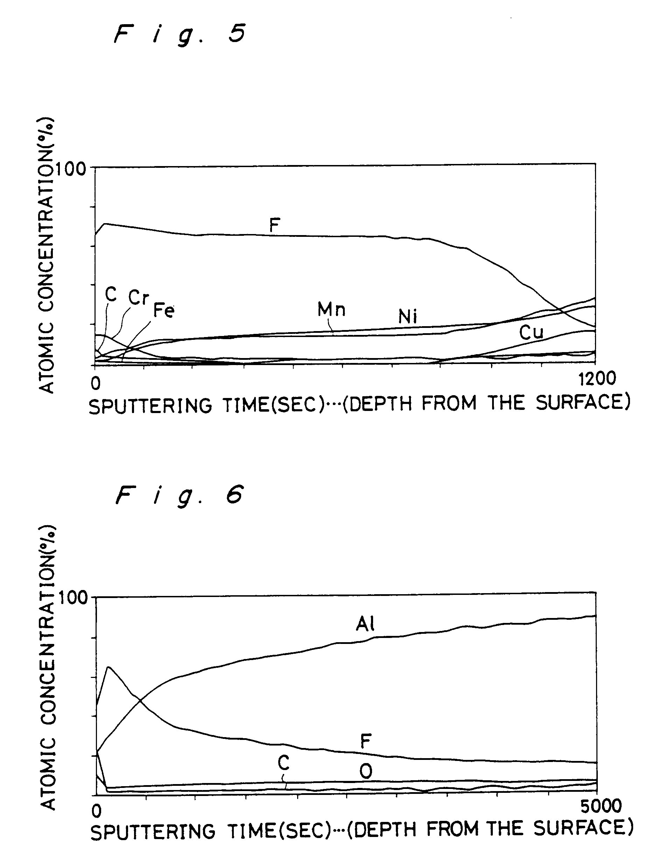

A polished monel (trademark) (Ni66, Cu29, Al3) plate (surface flatness Rmax = 0.03 to 1.0 um) was baked under high purity N₂ gas at 500°C for 1 hour, then fluorinated with 100% F₂gas at 400°C for 1 to 5 hours, and further heat-treated under high purity N₂ gas at 500°C for 2 hours. Figure 5 shows an ESCA chart of the monel plate thus treated.

### Example 9:

A polished aluminium ( 1050) plate (surface flatness Rmax = 0.03 to 1.0 um) was baked under high purity N₂ gas at 300°C for 1 hour, then fluorinated with 100% F₂ gas at 250°C for 1 to 5 hours, and further heat-treated under high purity N₂ gas at 350°C for 2 hours. Figure 6 shows an ESCA chart of the aluminium plate thus treated.

### Example 10:

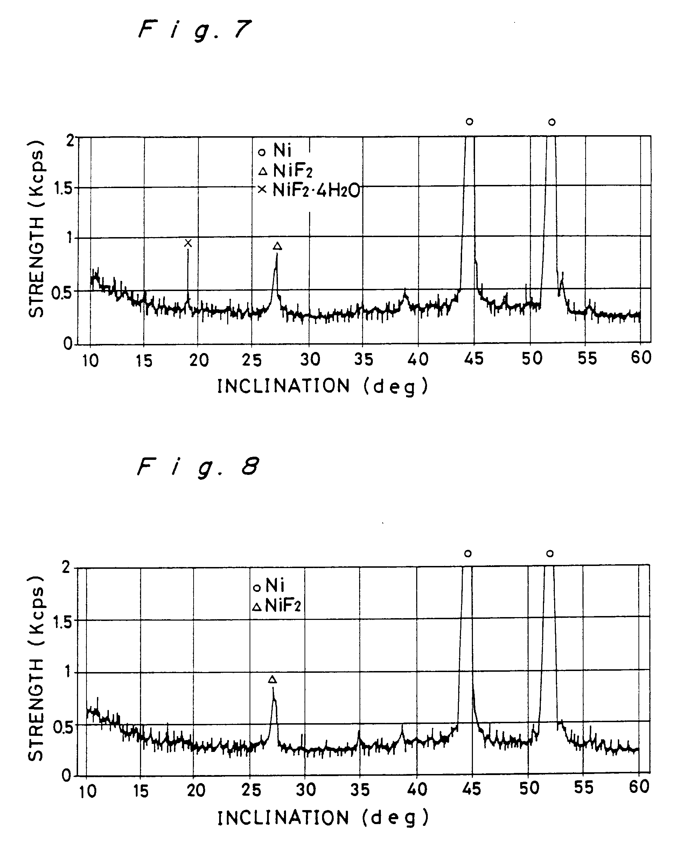

A polished nickel plate (surface flatness Rmax = 0.03 to 1.0 µm) was baked under high purity N₂ gas at 350°C for 1 hour, then fluorinated with 100% F₂ gas at 350°C for 1 to 5 hours, and further heat-treated under high purity N₂ gas at 400°C for 2 hours. Figure 7 shows an X-ray diffraction chart of the nickel plate thus treated. Another identical nickel plate was baked under high purity N₂ gas at 400°C for 1 hour, then fluorinated with 100% F₂ gas at 350°C for 1 to 5 hours, and further heat-treated under a high purity N₂ gas at 400°C for 2 hours. Figure 8 shows an X-ray diffraction chart of the nickel plate thus treated. In the X-ray chart of the nickel plate baked at 350°C, a peak of NiF₂·4H₂O is found in addition to that of NiF₂. On the other hand, in the X-ray chart of the nickel plate baked at 400°C, the peak of NiF₂ alone is found. Cracking and peeling occur in the fluorinated film with NiF₂·4H₂O, and thus passivated film of excellent corrosion resistance does not result therefrom.

### Example 11:

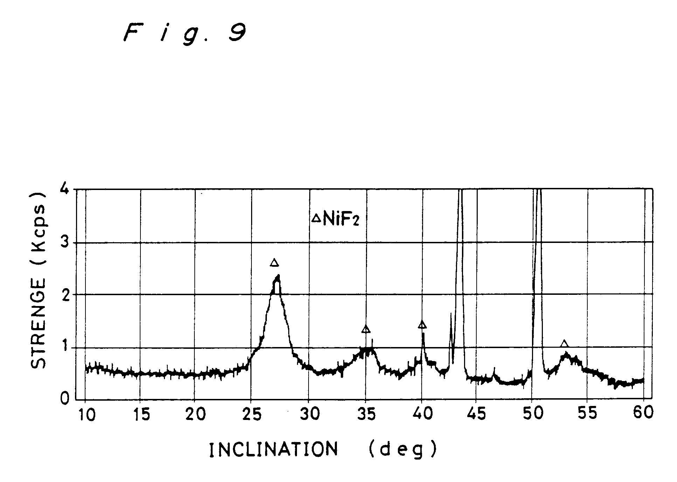

A polished hastelloy C (trademark) (Ni51, mo19, Cr17, Fe6, W5) plate (surface flatness Rmax = 0.03 to 1.0 µm) was baked under high purity N₂ gas at 500°C for 1 hour, then fluorinated with 100% F₂ gas at 250°C for 1 to 5 hours, and further heat-treated under high purity N₂ gas at 400°C for 2 hours. Figure 9 shows an X-ray diffraction chart of the nickel plate thus treated.

### Example 12:

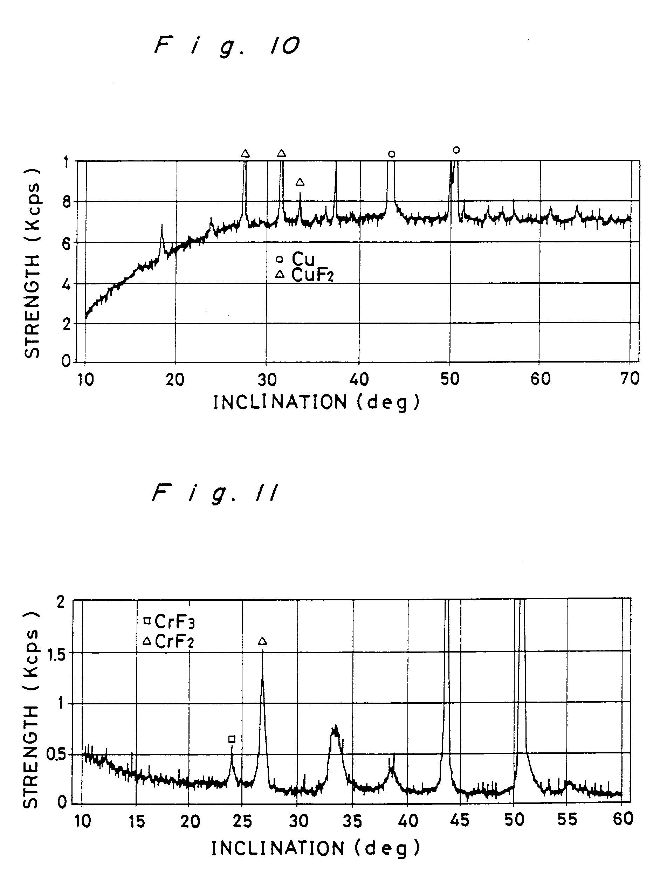

A polished copper plate (surface flatness Rmax = 0.03 to 1.0 µm) was baked under high purity N₂ gas at 500°C for 1 hour, then fluorinated with 100% F₂ gas at 400°C for 1 to 5 hours, and further heat-treated under high purity gas at 500°C for 2 hours. Figure 10 shows an X-ray diffraction chart of the copper plate thus treated. A sharp peak of CuF₂ was obtained.

### Example 13:

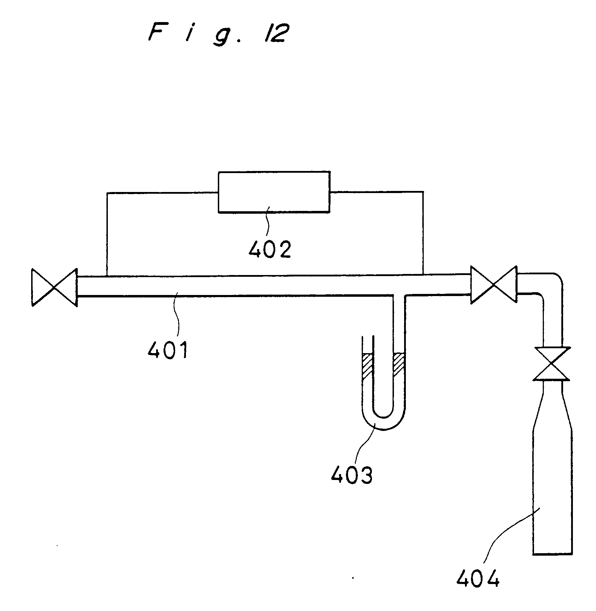

The surface of a chromium film of 0.4 µm (4000Å= formed by sputtering on a SUS-316L substrate was baked under high purity N₂ gas at 500°C for 1 hour, then fluorinated with 100% F₂ gas at 400°C for 1 to 5 hours, and further heat-treated under high purity gas at 500°C for 2 hours. Figure 11 shows an X-ray diffraction chart of the chromium thus treated. A sharp peak of CrF₂ was obtained.

### Example 14:

Table 7 shows evaluation of corrosion resistance of the films passivated by fluorination to chlorine gas, i.e., the most corrosive and permeable gas. In the evaluation, a chlorine gas was hermetically charged at atmospheric pressure into an electropolished nickel pipe of 6.35mm (1/4 inch) in diameter on which passivated films of different thickness are respectively formed, then was left at 100°C for 1 hour. Amount of reaction of the gas was calculated as a difference between the pressure in the pipe immediately after the sealing and the pressure after being left for 1 hour. Figure 12 shows a schematic view of the apparatus used in the evaluation. It was found that, in the passivated films of not less than 0.02 µm (200 Å) in thickness, their corrosion resistance was high if heat-treated.

**Table 7**

| Corrosion resitance of passivated film to chlorine gas | | | | | | | | |
|---|---|---|---|---|---|---|---|---|
| Thickness of passivated films in the electropolished nickel pipe ( µm) | 0 | | 50 | | 200 | | 750 | |
| Heat treatment | No | Yes | No | Yes | No | Yes | No | Yes |
| Reaction amount of Cℓ₂ gas (µg/cm²) | 4.0 | 4 0 | 3.5 | 3.5 | 1 0 | 0 | 0.7 | 0 |

### Example 15:

Table 8 shows evaluation of corrosion resistance of the passivated films to hydrogen fluoride gas containing moisture which accelerates corrosion. In the evaluation, test pieces with different passivated films were sealed in the gases of the composition given below at 25°C for 14 days, then corrosion level of the passivated film of each test piece was checked. It was found that each sample of 0.02 µm (200Å) in film thickness was not corroded at all if heat-treated. Composition of sealing gas (vol %) was HF:5, H₂O:2.5 and N₂:92.5.

**Table 8**

| Corrosion resistance of passivated films to hydrogen fluoride gas containing moisture | | | |
|---|---|---|---|
| Sample | Passivated film thickness | Corrosion | |
| | | Not heat-treated | Heat-treated |
| Polished Ni plate | 0.18 | Occurred | Not occurred at all |
| Ni film by sputtering | 0.19 | Occurred | Not occurred at all |
| Polished hastelloy C (trademark) plate | 0.21 | Occurred | Not occurred at all |
| Polished monel plate | 0.13 | Occurred | Not occurred at all |
| Polished Cu plate | 0.15 | Occurred | Not occurred at all |
| Cu film by sputtering | 0.16 | Occurred | Not occurred at all |
| Cr film by sputtering | 0.14 | Occurred | Not occurred at all |
| Polished Aℓ plate #1050 | 0.06 | Occurred | Not occurred at all |
| Aℓ film by sputtering | 0.11 | Occurred | Not occurred at all |

### Example 16:

Polished brass (Cu 70, Zn 30) plates (surface flatness Rmax = 0.03 to 1.0 µm) were baked under high purity N₂ gas at 300°C for 1 hour, then fluorinated with 100% F₂ gas for 1 to 5 hours, and further heat-treated under inert gas at 350°C for 2 hours. Table 9 shows thickness of the passivated films formed at each fluorinating temperature. At any fluorinating temperature, no crack or peeling of the passivated films was found.

**Table 9**

| Temperature of formation of films passivated by fluorination and film thickness | | |
|---|---|---|
| Film formation temp. (°C) | 200 | 250 |
| Film thickness (µm) | 0.085 | 0.12 |

### Example 17:

Polished SUS-316L plates (surface flatness Rmax = 0.03 to 1.0 µm) were fluorinated with 100% F₂ gas for 2 hours thereby forming passivated films, and further heat-treated under inert gas at 300°C for 2 hours. Table 10 shows thickness of the passivated films formed at each fluorinating temperature. Some crack and peeling was found in the film fluorinated and formed at 305°C.

**Table 10**

| Temperature of formation of films passivated by fluorination and film thickness | | | | |
|---|---|---|---|---|
| Film formation temp. (°C) | 150 | 200 | 250 | 305 |
| Film thickness (µm) | 0.05 | 0.104 | 0.225 | 0.41 |

### Example 18:

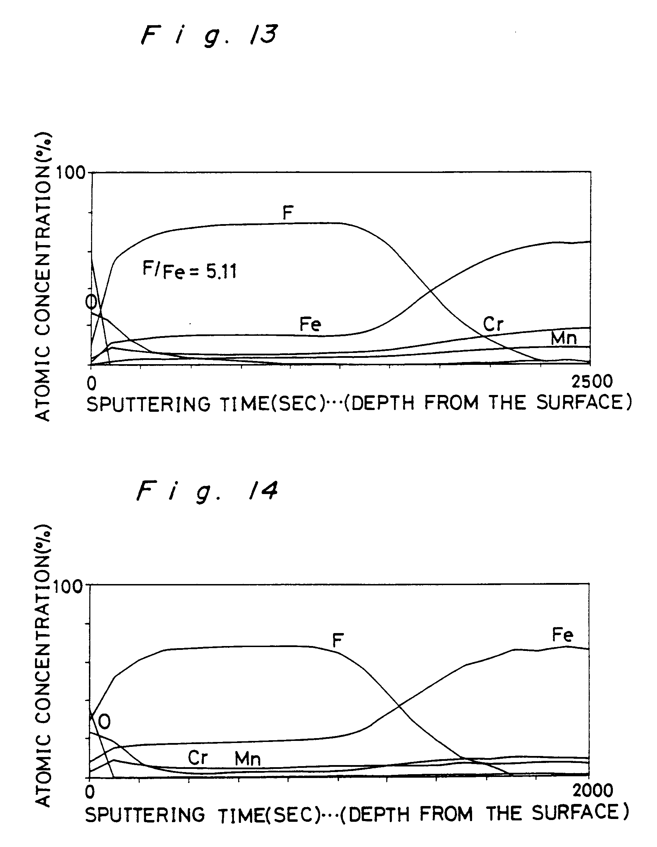

A polished SUS-316L plate (surface flatness Rmax = 0.03 to 1.0 µm) was fluorinated with 100% F₂ gas at 200°C for 2 hours thereby forming a passivated film. Figure 13 shows an ESCA chart of the fluorinated SUS-316L plate. Then, the fluorinated plate was further heat-treated under high purity N₂ gas at 300°C for 2 hours. Figure 14 shows an ESCA chart of the SUS-316L plate thus treated.

Atomic ratio of Fe to F for the sputtering time of 500 to 1000 seconds shown in Figure 13 is 5.11, while that for 400 to 800 seconds shown in Figure 14 is 3.66. This means that fluorine existing in the fluorinated film before the heat treatment was 5.11/3.66 = about 1.4 times as much as that existing in the passivated film after the heat treatment. The atomic ratio of 3.66 after the heat treatment is not coincident with the ratio of the chemical structure of FeF₂ of the passivated film obtained by X-ray analysis. This is because calibration was not exactly applied to the ESCA. It is obvious that the improvement in composition ratio shown in Figures 13 and 14 was achieved as a result of the heat treatment.

### Example 19:

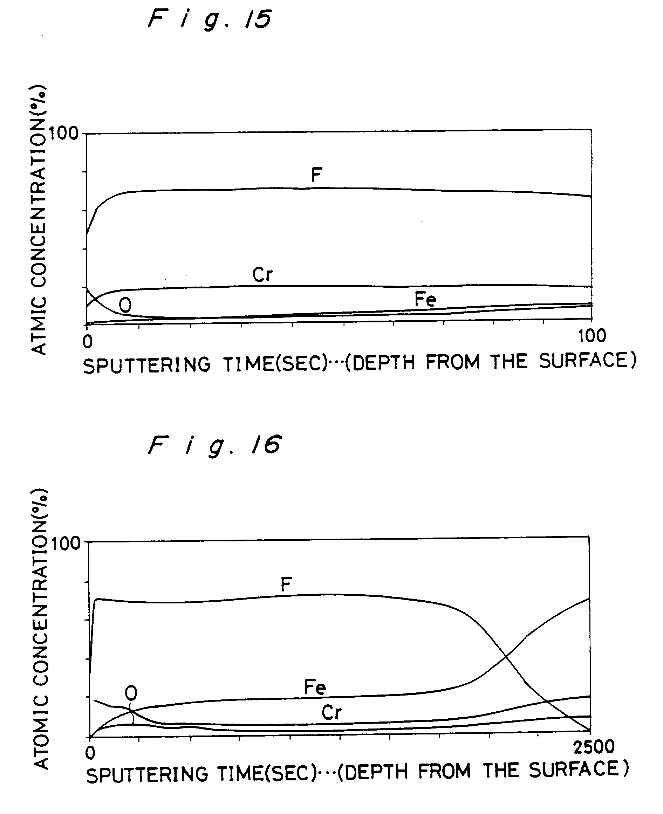

A polished SUS-316L plate (surface flatness Rmax = 0.03 to 1.0µm) was fluorinated with 100% F₂ gas at 200°C for 2 hours thereby forming a passivated film, and was further heat-treated under inert gas at 300°C for 2 hours. Figure 15 shows an ESCA chart of the chromium fluoride formed in the vicinity of the surface of the passivated film thus treated. Figure 16 shows an ESCA chart of the whole passivated film thus heat-treated up to the boundary with stainless steel. It is understood from Table 15 that a passivated film mainly composed of chromium fluoride exists in the vicinity of the surface of the passivated film, and from Table 16 that a mixed film of chromium fluoride and iron fluoride exists between the passivated film and the boundary with stainless steel. This film passivated by fluorination also satisfies the stoichiometric ratio. In other words, corrosion resistance was obviously improved as a result of the heat treatment.

### Example 20:

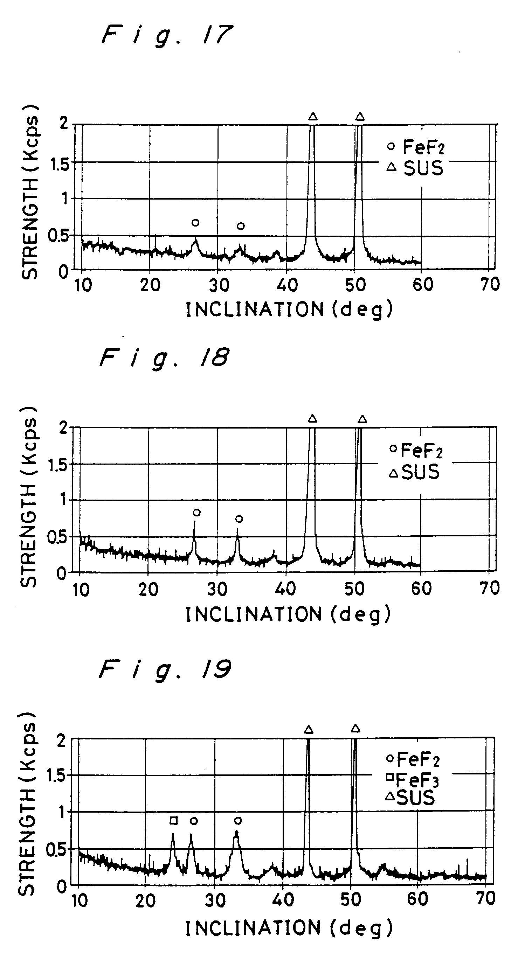

A polished SUS-316L plate (surface flatness Rmax = 0.03 to 1.0µm) was fluorinated with 100% F₂ gas at 200°C for 2 hours thereby a passivated film being formed. Figure 17 shows an X-ray diffraction chart of the fluorinated SUS-316L plate. Then this fluorinated SUS-316L plate was further heat-treated under inert gas at 300°C for 2 hours. Figure 8 shows an X-ray diffraction chart of the heat-treated plate. Only FeF₂ is found in both Figures 17 and 18, but the peak of FeF₂ after the heat treatment shown in Figure 18 is sharper. This means that with the progress of crystallization, the passivated film is stably formed.

### Comparative Example 1:

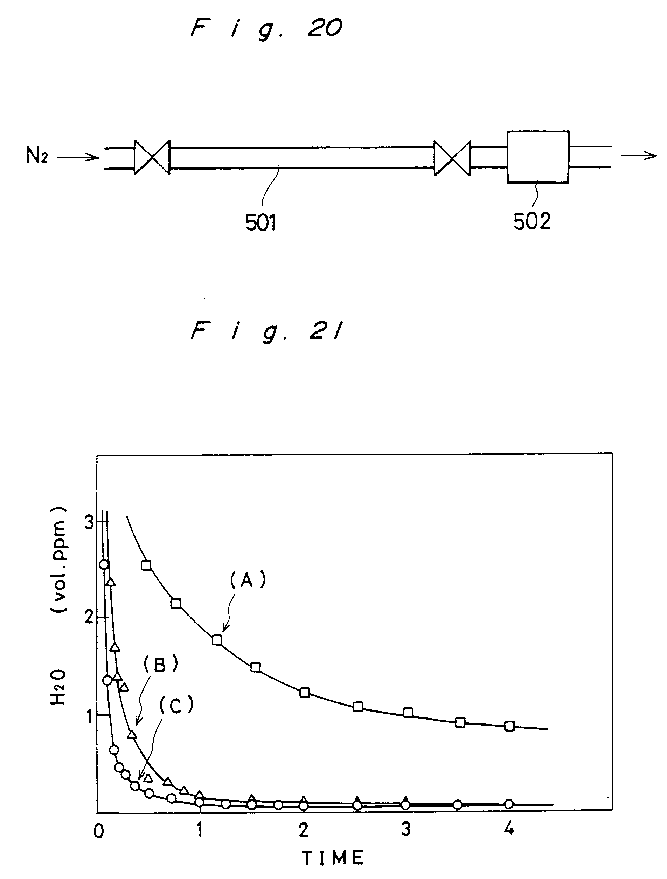

A polished SUS-316L plate (surface flatness Rmax = 0.03 to 1.0 µm) was fluorinated with 100% F₂ gas at 275°C for 2 hours thereby forming a passivated film. Figure 19 shows an X-ray diffraction chart of the fluorinated plate. FeF₃ was produced in the passivated film, and a partial peeling was found.

### Example 21:

Table 11 shows an evaluation of corrosion resistance of the passivated films from the viewpoint of difference in flatness on the metal surface and whether or not heat treatment is applied. In the evaluation, SUS-316L test pieces of different surface conditions were fluorinated under 100% F₂ gas at 200°C for 2 hours thereby forming passivated films. Heat treatment of them was carried out at 300°C for 2 hours. Corrosion resistance was checked by immersing the test pieces into 50 % HF solution and measuring the time elapsed up to generation of H₂ bubbles from the metal surface. It was found that no even film was obtained and corrosion resistance was poor when fluorinating the non-polished surface and fluorinating the surface thereby forming a passivated film by heat treatment. On the other hand, when forming a passivated film on the polished surface and applying heat treatment thereto, even and fine films were obtained resulting in sharp improvement of corrosion resistance.

**Table 11**

| | SUS-316L not polished | | SUS-316l polished | |
|---|---|---|---|---|
| Application of heat treatment | No | Yes | No | Yes |
| Flatness of surface before forming passivated film Rmax (µm) | 2 to 5 | 2 to 5 | 0.03 to 1.0 | 0.03 to 1.0 |
| Flatness of surface after forming passivated film Rmax (µm) | 2 to 5 | 2 to 5 | 0.03 to 1.0 | 0.03 to 1.0 |
| Time up to H₂ bubbling (min) | 1 | 2 | 25 | 45 |

### Example 22:

Table 12 shows an evaluation of corrosion resistance of the film passivated by fluorination to chlorine gas, i.e., the most corrosive and permeable gas. In the evaluation, a chlorine gas was sealed at atmospheric pressure in a SUS-316L pipe of 1/4 inch in diameter on which passivated films of different thickness are respectively formed, then was left at 100°C for 1 hour. The amount of reaction of the gas was calculated as a difference between the pressure in the pipe immediately after the sealing and the pressure after being left for 1 hour. The same apparatus as shown in Figure 10 was used in the evaluation. It was found that in the passivated films of not less than 500 Å in thickness, their corrosion resistance was high if heat-treated.

**Table 12**

| | | | | | | | | |
|---|---|---|---|---|---|---|---|---|
| Thickness of passivated films in the SUS-316L pipe (µm) | 0 | | 0.04 | | 0.066 | | 0.104 | |
| Heat treatment | No | Yes | No | Yes | No | Yes | No | Yes |
| Reaction amount of Cl₂ gas (µg/cm²) | 5.0 | 5.0 | 3.0 | 2.0 | 1.0 | 0 | 0.9 | 0 |

### Example 23:

Table 13 shows an evaluation of corrosion reistance of the passivated films to hydrogen fluoride gas which contains moisture, thus accelerating corrosion. In the evaluation, a gas of following composition was hermetically charged into SUS-316L pipes with different passivated films at 25°C for 72 hours, then corrosion of the inner wall of the pipe was checked. It was found that there was no corrosion at all in the passivated films of both 0.066µm (660Å) and 0.104 µm (1040Å) in thickness. Composition Vol % of the sealed gas was HF: 5.0, H₂0:1.0 and N₂: 94.

**Table 13**

| | | | | | | | | |
|---|---|---|---|---|---|---|---|---|
| Thickness of passivated film in SUS316 pipe (µm) | 0 | | 0.04 | | 0.066 | | 0.104 | |
| Heat treatment | No | Yes | No | Yes | No | Yes | No | Yes |
| Corrosion level | High | High | High | Low | Med | Zero | Med | Zero |

### Example 24:

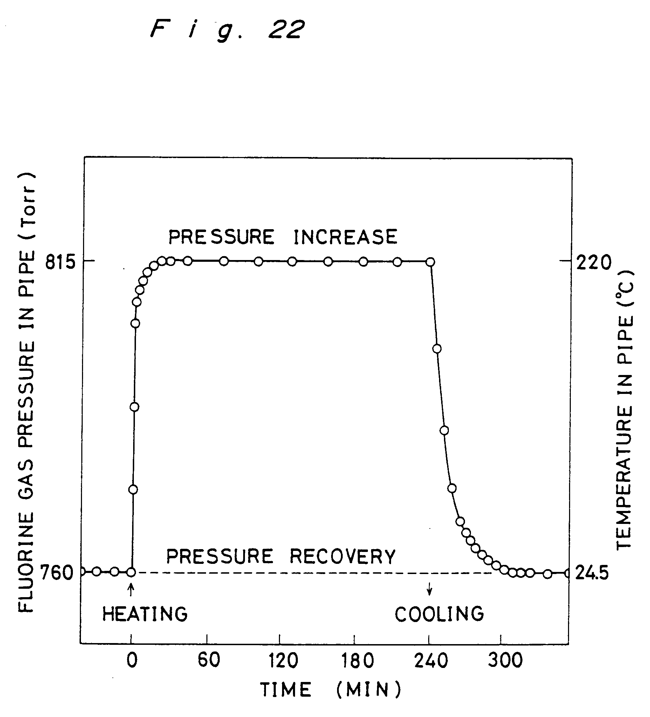

The degassing characteristics of film passivated by fluorination were evaluated. In the experiment for the evaluation, SUS-316L sample pipes of 6.35 mm (1/4 inch) in diameter. and 1 m in length were used. To establish the same moisture absorption condition for each sample, the samples are left for 72 hours in a clean room where humidity was preliminarily set to 50 % and temperature to 25°C, then the experiment was carried out. Figure 20 shows a schematic view of the apparatus used in the experiment, and in which numeral 501 indicates a SUS-316L, sample pipe of 6.35mm (1/4 inch) diameter and 1 m in length and numeral 502 indicates a dew-point meter. In the experiment, moisture contained in the gas was measured by the dew-point meter 502 after passing a high purity N₂ gas (whose moisture was not more than 0.1 Vol ppm) through the sample pipe 501 at the rate of 500 cc/min. Figure 21 shows results of the experiment carried out under normal temperature, and in which reference (B) indicates a sample of electropolished pipe, (A) indiates a sample of internal surface of the electropolished pipe which is fluorinated under F₂ gas at 200°C for 2 hours, and (C) indicates a sample of same internal surface which was further heat-treated under inert gas at 300°C for 2 hours.

As is obviously shown in Figure 21, the sample pipe (A) to which only passivation was applied as mentioned above exhibits poor dehydration, while the sample pipe (C) which was passivated and heat-treated exhibits excellent dehydration characteristics.

### Example 25:

A SUS-304 cylinder with film passivated by fluorination and a SUS-304 cylinder without passivated film were respectively filled with halogen compound gases shown in Table 14, and after leaving them for one week under normal temperature, the gases in the respective cylinders were analyzed by infrared spectrometer. Table 14 shows the results.

**Table 14**

| Sample gas | Impuriy | Permeability at peak of impurity by infrared spectrometer (%) | |
|---|---|---|---|
| | | Cylinder without passivated film | Cylinder with passivated film |
| F₂ | 3878 cm⁻¹ HF absorbed | 0.8 | N.D* |
| SF₄ | 3878 cm⁻¹ HF absorbed | 2.9 | N.D |
| SiF₄ | 3878 cm⁻¹ HF absorbed | 0.8 | N.D |
| BF₃ | 3300 cm⁻¹ OH absorbed | 0.8 | N.D |
| | 1120 cm⁻¹ B-O-B absorbed | 5.1 | N.D |
| WF₆ | 3878 cm⁻¹ HF absorbed | 2.7 | N.D |
| MoF₆ | 3878 cm⁻¹ HF absorbed | 2.3 | N.D |
| PF₃ | 3878 cm⁻¹ HF absorbed | 0.9 | N.D |
| PF₅ | 1433 cm⁻¹ PFO absorbed | 1.0 | N.D |
| AsF₃ | 3878 cm⁻¹ HF absorbed | 2.2 | N.D |
| AsF₅ | 811 cm⁻¹ AsOF absorbed | 7.5 | N.D |
| BCl₃ | 2950 cm⁻¹ HCl absorbed | 1.3 | N.D |

| | | | |
|---|---|---|---|
| *ND: No peak was found Infrared absorption cell : BaF₂ window plate Concentration of gases 1.013 x 10⁵Pa (760 Torr) | | | |

### Example 26:

To acknowledge the effect of heat treatment, permeability of fluorine in the passivated films which were heat-treated was checked. In the experiment, an electro polished SUS-316L sample pipe of 6.35mm (1/4 inch) in diameter and 1 m in length was fluorinated with 100% F₂ gas at 220°C for 80 minutes, and heat-treated under N₂ gas at 320°C for 24 hours thereby forming a passivated film. As shown in Figure 22, fluorine gas was sealed in the pipe on which passivated film was formed at 1.013 x 10⁵ Pa (760 Torr) and heated at the same temperature as the fluorination for 4 hours. Then, consumption of fluorine at the time of heating was checked with reference to the pressure in the pipe when the temperature was returned to that before heating. Variation of pressure in the pipe between the time before heating and the time after heating was not more than 6.5 x 10¹ Pa (0.5 Torr), i.e., detectable limit by manometer, and no substantial variation was found. In effect, a stable film passivated by fluorination without permeation of fluorine was formed by favourably changing the nonstoichiometric ratio (F /Fe = 5.11) to the stoichiometric ratio F /Fe = 3.66) by heat treatment and, as a result of this, it was acknowledged that high corrosion resistance to various corrosive gases was achieved by the invention.

## Claims

1. A metal material comprising at least one metal substrate selected from the group consisting of stainless steel, nickel, nickel alloy, monel, copper, copper alloy, chromium, hastelloy, aluminium and aluminium alloy, and a passivated film formed on at least a portion of the surface of the metal substrate by the following three steps of:
(i) baking the metal substrate at a temperature for stainless steel being 200 to 500°C for 1 to 5 hours for nickel, copper, copper alloy, monel, hastelloy, nickel alloy and chromium being 350 to 600°C for 1 to 5 hours, for aluminium and aluminium alloy being 150 to 400°C for 1 to 5 hours,
(ii) fluorinating the baked metal substrate at a temperature for stainless steel being 100 to 300°C for 1 to 5 hours, for nickel, nickel alloy, monel, copper, copper alloy and chromium being 200 to 500°C for 1 to 5 hours, for hastelloy being 150 to 300°C for 1 to 5 hours, for aluminium and aluminium alloy being 200 to 400°C for 1 to 5 hours.
(iii) and then heat-treating the resulting metal substrate for 1 to 5 hours under inert gas at a temperature for stainless steel being 200 to 600°C for monel, nickel, nickel alloy, copper, copper alloy and chromium being 300 to 600°C, for hastelloy, aluminium and aluminium alloy being 200 to 400°C.

2. A metal material according to claim 1, wherein said passivated film is formed on a surface of the metal substrate which is polished to the level of Rmax = 0.03 - 1.0 µm, where Rmax is the maximum value of the difference between irregularities.

3. The use of one or more of the metal materials according to claim 1 or 2, in a gas treating apparatus wherein at least one of said metal materials is used as a part at least partially forming said apparatus.

4. The use of one or more of the metal materials according to claim 3, in a gas treating apparatus used in storage, distribution or reaction of gas.

## Patentansprüche

1. Metallmaterial, welches wenigstens ein aus der Gruppe rostfreier Stahl, Nickel, Nickellegierung, Monel, Kupfer, Kupferlegierung, Chrom, Hastelloy, Aluminium und Aluminiumlegierung ausgewähltes Metallsubstrat enthält und einen passivierten Film, der auf wenigstens einem Teil der Oberfläche des Metallsubstrats durch die folgenden drei Schritte gebildet ist:
(i) Wärmebehandlung des Metallsubstrats bei einer Temperatur von 200 bis 500°C, 1 bis 5 Stunden lang für rostfreien Stahl, bei 350 bis 600°C, 1 bis 5 Stunden lang für Nickel, Kupfer, Kupferlegierung, Monel, Hastelloy, Nickellegierung und Chrom, bei 150 bis 400°C, 1 bis 5 Stunden lang für Aluminium und Aluminiumlegierung,
(ii) Fluorierung des wärmebehandelten Metallsubstrats bei einer Temperatur von 100 bis 300°C, 1 bis 5 Stunden lang für rostfreien Stahl, bei 200 bis 500°C, 1 bis 5 Stunden lang für Nickel, Nickellegierung, Monel, Kupfer, Kupferlegierung und Chrom, bei 150 bis 300°C, 1 bis 5 Stunden lang für Hastelloy, bei 200 bis 400°C, 1 bis 5 Stunden lang für Aluminium und Aluminiumlegierung
(iii) und dann Wärmebehandeln des entstandenen Metallsubstrats 1 bis 5 Stunden lang unter Schutzgas bei einer Temperatur von 200 bis 600°C für rostfreien Stahl, bei 300°C bis 600°C für Monel, Nickel, Nickellegierung, Kupfer, Kupferlegierung und Chrom, bei 200 bis 400°C für Hastelloy, Aluminium und Aluminiumlegierung.

2. Metallmaterial nach Anspruch 1, bei dem der genannte passivierte Film auf einer Oberfläche des Metallsubstrats gebildet ist, welche auf das Niveau von Rmax=0.03-1.0 µm poliert ist, wobei Rmax der maximale Wert der Differenz zwischen Unebenheiten ist.

3. Verwendung eines oder mehrerer Metallmaterialien nach Anspruch 1 oder 2 in einer Apparatur zur Gasbehandlung, in der wenigstens eines der genannten Metallmaterialien als ein wenigstens teilweise die genannte Apparatur bildender Teil verwendet wird.

4. Verwendung eines oder mehrerer der Metallmaterialien nach Anspruch 3 in einer Apparatur zur Gasbehandlung, welche zur Lagerung, Verteilung von Gas oder zur Gasreaktion verwendet wird.

## Revendications

1. Matériau métallique comprenant au moins un substrat métallique choisi dans le groupe formé par l'acier inoxydable, le nickel, un alliage de nickel, un Monel, le cuivre, un alliage de cuivre, le chrome, un Hastelloy, l'aluminium et un alliage d'aluminium, et une couche passivée formée sur une partie au moins de la surface du substrat métallique par les trois étapes suivantes :
(i) cuire le substrat métallique à une température de 200 à 500°C pendant 1 à 5 heures pour l'acier inoxydable, de 350° à 600°C pendant 1 à 5 heures pour le nickel, le cuivre, l'alliage de cuivre, le Monel, le Hastelloy, l'alliage de nickel et le chrome, ou de 150 à 400°C pendant 1 à 5 heures pour l'aluminium et l'alliage d'aluminium,
(ii) fluorer le substrat métallique cuit à une température de 100 à 300°C pendant 1 à 5 heures pour l'acier inoxydable, de 200 à 500°C pendant 1 à 5 heures pour le nickel, l'alliage de nickel, le Monel, le cuivre, l'alliage de cuivre et le chrome, de 150 à 300°C pendant 1 à 5 heures pour le Hastelloy, ou de 200 à 400°C pendant 1 à 5 heures pour l'aluminium et l'alliage d'aluminium,
(iii) puis traiter thermiquement le substrat métallique résultant pendant 1 à 5 heures sous gaz inerte à une température de 200 à 600°C pour l'acier inoxydable, de 300 à 600°C pour le Monel, le nickel, l'alliage de nickel, le cuivre, l'alliage de cuivre et le chrome, ou de 200 à 400°C pour le Hastelloy, l'aluminium et l'alliage d'aluminium.

2. Matériau métallique selon la revendication 1, dans lequel ladite couche passivée est formée sur une surface du substrat métallique qui est polie jusqu'au degré de Rₘₐₓ = 0,03 à 1,0 µm, où Rₘₐₓ est la valeur maximale de la différence entre irrégularités.

3. Utilisation d'un ou plusieurs des matériaux métalliques selon la revendication 1 ou 2, dans un appareil de traitement de gaz dans lequel l'un au moins desdits matériaux métalliques est utilisé sous forme d'un élément constituant au moins partiellement ledit appareil.

4. Utilisation d'un ou plusieurs des matériaux métalliques selon la revendication 3, dans un appareil de traitement de gaz utilisé dans le stockage, la distribution ou la réaction de gaz.
